Europäisches Patentamt

European Patent Office

Office européen des brevets

(19)

(11) **EP 1 069 428 A1**

(12) **EUROPEAN PATENT APPLICATION**

(43) Date of publication:
**17.01.2001 Bulletin 2001/03**

(51) Int Cl.$^7$: **G01N 21/41**

(21) Application number: **99305666.2**

(22) Date of filing: **16.07.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **TEXACO DEVELOPMENT CORPORATION**
**White Plains, New York 10650 (US)**

(72) Inventors:
• **Maes, Jean-Pierre**
  **9820 Merelbeke (BE)**

• **van Kenhove, Filip**
  **2890 St. Amands (BE)**
• **Roose, Peter**
  **9831 Sint-Martens-Latem (BE)**
• **Lievens, Serge**
  **9820 Merelbeke (BE)**

(74) Representative: **Green, Mark Charles et al**
**Urquhart-Dykes & Lord,**
**30 Welbeck Street**
**London W1G 8ER (GB)**

(54) **Field test apparatus and method for the determination of coolant content and freezing protection**

(57)     A method and apparatus are provided for the determination of levels of components of coolants and heat exchange fluids, particularly monoethylene - and monopropylene - glycol content in a three component system. Refractometric and gravimetric values are taken, and the volume fraction of the individual components obtained by inverting a system of linear equations. A microprocessor controlled field test apparatus can compute the various values to be determined.

EP 1 069 428 A1

**Description**

FIELD OF THE INVENTION

The present invention relates to a method for the determination of the level of certain components of coolants and heat exchange fluids, particularly for the determination of monoethylene glycol content and monopropylene glycol content. The method involves measurement of refractometric and gravimetric values. The present invention also relates to a microprocessor controlled field test apparatus. The microprocessor may be used to compute the freezing point of the tested solution.

BACKGROUND OF THE INVENTION

Compositions comprising aqueous monoethylene glycol (MEG) are in widespread use as engine coolants in automotive and heavy duty applications. Because of their lower toxicity, monopropylene glycol (MPG) coolants are being introduced in consumer application markets and recently also in automotive and heavy duty markets. In practice, when both products are available to the consumer, mixtures of MEG and MPG coolants are found in coolant systems. The consumer may add MPG coolant to engine coolant systems that are initially filled with MEG coolant, since engine cooling systems can in most cases not be fully drained. This will result in residual engine coolant being admixed with the newly added coolant. Thorough flushing procedures are required to remove all residual coolant from automotive or heavy duty engine cooling systems.

In the known art, field refractometers and hydrometers are used to estimate the refractive index and specific gravity of coolant present. The MEG and MPG content can then be determined graphically by superposition of graph lines for the determined refractive index and specific gravity data (Society of Automotive Engineers paper 960638).

The current invention uses different gravimetric and refractrometric techniques and a microprocessor in order to provide an easier and more accurate measurement of the MEG, MPG and water content of glycol mixtures. The microprocessor is used to do the measurements and compute and display the MEG, MPG and water content, and optionally the frost protection provided by the mixture.

SUMMARY OF THE INVENTION

Based on a combination of gravimetric and refractrometric techniques, the subject invention provides an accurate measurement of the MEG, MPG and water content of glycol mixtures.

An easy, straightforward field test, with minimum operator interaction is developed to provide an accurate in situ determination of the MEG, MPG and water content of glycol mixtures. Optionally, the microprocessor can also compute and display the frost protection provided by the mixture. Advantages of the invention are accuracy, ease of use, long lifetime and the possibility of providing operator directives based on test results, as well as the possibility of combining this test with other measurements (pH, inhibitor content), which are important to fleet or heat-exchange system operators.

DETAILED DESCRIPTION OF THE INVENTION

The density of monoethylene glycol at 20°C is 1.1088. The density of monopropylene glycol at 20°C is 1.0361. The density of water at 20°C is 0.9982. The density of MEG/MPG/water mixtures ($d_m$) can be expected to be a function of the volume concentrations and densities of the mixed components.
Within reasonable approximation the measured density ($d_m$) of the mixture is

$$d_m = E.\, d_e + P.\, d_p + W.\, d_w \qquad (1)$$

where E, P and W are respectively the volume fractions of commingled MEG, MPG and water, whilst $d_e$, $d_p$ and $d_w$ are the respective densities.

The refractive index of water at 20°C is 1.3328. The refractive index of monoethylene glycol at 20°C is 1.4318. The refractive index of monopropylene glycol at 20°C is 1.4324. The values for the latter two are sufficiently close to enable a relatively accurate measurement of the total amount of MEG and MPG in aqueous solution to be made by determination of the refractive index of the aqueous test solution. This can be done with a refractometer probe.

Within reasonable approximation the measured refractive index ($n_m$) of the mixture is

$$n_m = E.\, n_e + P.\, n_p + W.\, n_w \qquad (2)$$

where $n_e$, $n_p$ and $n_w$ are respectively the refractive indices of the admixed MEG, MPG and water.

The sum of the partial volume concentrations is

$$E+P+W = 1 \qquad (3)$$

Since the refractive indices and densities are known or can be measured from standards at a particular temperature, the concentration of water, monoethylene glycol and propylene glycol can be computed. Depending on the required accuracy, temperature compensation can be built in. Since coolants usually contain corrosion inhibitors, corrections can be computed for the relatively small influence of these inhibitors on the density and refractive index. If a very accurate measurement is required, the apparatus can be calibrated on the mixed coolants.

EXAMPLES

In a first approximation, since $n_e$ and $n_p$ are about equal, $n_e = n_p = n_g$ (average refractive index of the two glycols). From this, knowing

$$n_m = [E+P]. n_g + W. n_w.$$

and

$$W = 1 - [E+P]$$

the total glycol concentration $E+P = [n_m-n_w] / [n_g- n_w]$
The total glycol- and water concentration can thus easily be determined from the measured refractive index and experimental or literature values for $n_g$ and $n_w$.

One preferred embodiment for the refractometer probe comprises a prism made of material with high refractive index (for instance flint glass with refractive index n=1.88), a near infrared light emitting diode (LED) and a radiation detector (phototransistor or photodiode). Means are preferably provided to reduce the influence of incident radiation for example by using a near infrared transmitting filter on the detection side. A pulse technique is preferably used to reduce ageing of emitters and detectors. Also, using this pulse technique, dark current and incident light compensation makes the measurements more reproducible then conventional refractrometric techniques. The amount of infrared radiation internally reflected within the prism is a function of the refractive index of the test solution in which the prism is immersed (the MEG coolant/MPG coolant/water mixture).

The density of the test solution can be determined using for instance a differential pressure sensor. The sensor measures the pressure difference at different height in the coolant mixture. The measured density of the coolant mixture is:

$$d_m = \Delta p/g_n. \Delta h$$

where $\Delta p$ is the measured pressure differential, $\Delta h$ the height differential and $g_n$ the standard acceleration of gravity.

Since

$$d_m = E. d_e + P. d_p + W. d_w$$

and the total glycol concentration [E+P] and the water concentration W, are known from the refractive index measurement, the values for the concentrations of MEG (E) and MPG (P) can be computed from the density measurement, and experimental or literature values for $d_e$, $d_p$ and $d_w$.

The microprocessor correlates the measured concentrations with the afforded frost protection of the used medium (the MEG/MPG/water mixture). The water and MEG and MPG contents can be displayed on for instance an alphanumeric display or screen, or the information can be used to display other messages. Optionally, a temperature probe (e.g. Pt100) can be used for temperature compensation in order to obtain more accurate measurements.

The microprocessor can be programmed to take account of the approximation made that the refractive index of monoethylene glycol was the same as the refractive index of monopropylene glycol, by using the exact refractive index of the measured MEG/MPG ratio. The microprocessor can also correct for temperature if the temperature sensor is used. Other variants causing deviation from the theoretical model can be corrected.

FIGURES

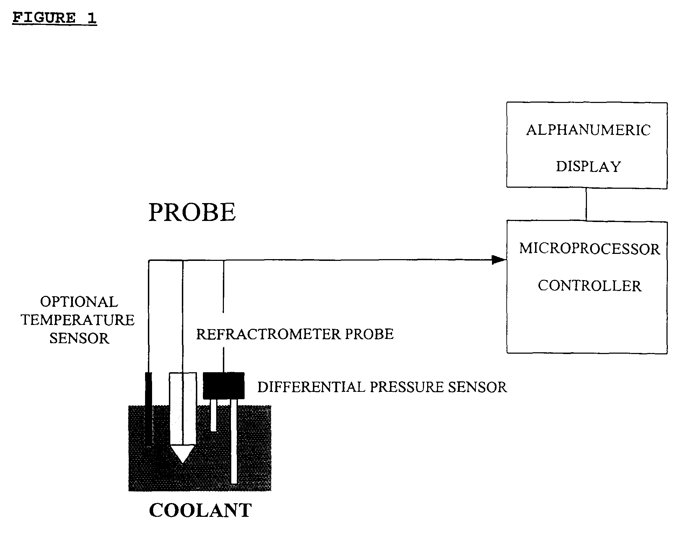

Figure 1 shows a schematic diagram of the field test apparatus.

**Claims**

1. A method for determining the glycol content of a mixture of monoethylene glycol, monopropylene glycol and water which comprises determining the refractive index of the mixture and the density of the mixture, and determining the concentrations using the formulae.

$$(1) \qquad d_m = E. d_e + P. d_p + W. d_w$$

where E, P and W are the volume fractions of monoethylene glycol, monopropylene glycol and water respectively; $d_e$, $d_p$ and $d_w$ are the respective densities; and $d_m$ the measured density of the mixture,

$$(2) \qquad n_m = E. n_e + P. n_p + W. n_w$$

where E, P and W are as previously defined; $n_e$, $n_p$ and $n_w$ are the refractive indices of monoethylene glycol, monopropylene glycol and water; and $n_m$ the measured refractive index of the mixture, and

$$(3) \qquad E+P+W = 1$$

where E, P and W are as previously defined.

2. A method as claimed in claim 1 wherein in formula (2) $n_e$ is approximated to be equal to $n_g$.

3. A method as claimed in claim 1 or claim 2 wherein an adjustment is made for the temperature of the mixture.

4. An apparatus for carrying out a method as claimed in claim 1 comprising a refractometer probe, a differential pressure sensor, a microprocessor and a display unit.

5. An apparatus as claimed in claim 4 wherein there is provided a temperature probe.

6. An apparatus as claimed in claim 4 or claim 5 wherein the refractometer probe comprises a prism, a near infrared light emitting diode and a radiation detector.

7. An apparatus as claimed in claim 6 further comprising means to reduce the influence of incident radiation.

8. An apparatus as claimed in claim 6 or claim 7 which uses a pulse technique.

FIGURE 1

PROBE

ALPHANUMERIC

DISPLAY

MICROPROCESSOR

CONTROLLER

OPTIONAL
TEMPERATURE
SENSOR

REFRACTROMETER PROBE

DIFFERENTIAL PRESSURE SENSOR

COOLANT

EP 1 069 428 A1

**European Patent Office**

**EUROPEAN SEARCH REPORT**

Application Number

EP 99 30 5666

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 2 604 786 A (DAI ICHI KOGYO SEIYAKU CO LTD) 8 April 1988 (1988-04-08) | 1-3 | G01N21/41 |
| A | * page 2, line 2 - page 3, line 10; page 6, line 14 - page 7, line 21; figure 4 * | 4,5 | |
| A | DE 195 23 110 A (DAIMLER BENZ AG) 8 August 1996 (1996-08-08) * column 2, line 25 - column 4, line 45; figures * | 1 | |
| X | SAASKI ELRIC W ET AL: "Fiber optic sensing system based on spectral modulation" ADVANCES IN INSTRUMENTATION, vol. 41, no. part 3, 1986, pages 1177-1184, XP002126124 ISBN 0-87664-951-7 | 4,5 | |
| Y | * page 1177 - page 1179; figures 1,2,6 * | 6-8 | TECHNICAL FIELDS SEARCHED (Int.Cl.7) |
| Y | US 4 907 878 A (ARDITTY H ET AL) 13 March 1990 (1990-03-13) | 6-8 | G01N |
| A | * column 1, line 59 - column 5, line 34; claim 1; figures 1-3 * | 1 | |
| A | DE 44 44 847 A (CARL ZEISS JENA GMBH) 20 June 1996 (1996-06-20) * column 1, line 3 - column 3, line 66; figures 1-3 * | 1,3-6 | |
| A | US 3 917 410 A (ULRICH H) 4 November 1975 (1975-11-04) * column 2, lines 28-45; column 4, line 52 - column 6, line 24; figures 4-11 * | 1,3-5 | |

-/--

The present search report has been drawn up for all claims

| Place of search | Date of completion of the search | Examiner |
|---|---|---|
| BERLIN | 17 December 1999 | Johnson, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

6

European Patent
Office

**EUROPEAN SEARCH REPORT**

Application Number

EP 99 30 5666

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 33 21 217 A (PHOENIX ARMATUREN-WERKE BREGEL GMBH) 13 December 1984 (1984-12-13) * page 5, line 11 - page 11, line 9; figures * | 4,5 | |
| A | DATABASE COMPENDEX [Online] ENGINEERING INFORMATION, INC., NEW YORK, NY, US HUDGENS R D ET AL: "Analysis of coolants from diesel engines" Database accession no. EIX92031192572 XP002126125 * abstract * & SAE (SOCIETY OF AUTOMOTIVE ENGINEERS) TRANSACTIONS 1990, vol. 99, no. Sect 2, 1990, pages 136-156, ISSN 0096-736X | 4 | |

TECHNICAL FIELDS SEARCHED (Int.Cl.7)

The present search report has been drawn up for all claims

| Place of search | Date of completion of the search | Examiner |
|---|---|---|
| BERLIN | 17 December 1999 | Johnson, K |

EPO FORM 1503 03.82 (P04C01)

**ANNEX TO THE EUROPEAN SEARCH REPORT
ON EUROPEAN PATENT APPLICATION NO.**

EP 99 30 5666

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-1999

| Patent document cited in search report | | Publication date | Patent family member(s) | | Publication date |
|---|---|---|---|---|---|
| FR 2604786 | A | 08-04-1988 | JP | 1771342 C | 30-06-1993 |
| | | | JP | 4064576 B | 15-10-1992 |
| | | | JP | 63090741 A | 21-04-1988 |
| | | | DE | 3733200 A | 07-04-1988 |
| DE 19523110 | A | 08-08-1996 | NONE | | |
| US 4907878 | A | 13-03-1990 | FR | 2590670 A | 29-05-1987 |
| | | | AT | 78340 T | 15-08-1992 |
| | | | DE | 3686029 A | 20-08-1992 |
| | | | EP | 0225256 A | 10-06-1987 |
| | | | JP | 62148835 A | 02-07-1987 |
| DE 4444847 | A | 20-06-1996 | NONE | | |
| US 3917410 | A | 04-11-1975 | DE | 2137842 A | 08-02-1973 |
| DE 3321217 | A | 13-12-1984 | NONE | | |

EPO FORM P0459